(19) Europäisches Patentamt
European Patent Office
Office européen des brevets

(11) Publication number: **0 153 074**
**A2**

# (12) EUROPEAN PATENT APPLICATION

(21) Application number: **85300737.5**

(22) Date of filing: **04.02.85**

(51) Int. Cl.⁴: **C 08 G 65/44**

(30) Priority: **06.02.84 JP 19712/84**

(43) Date of publication of application: **28.08.85**
**Bulletin 85/35**

(84) Designated Contracting States: **DE FR GB NL**

(71) Applicant: **MITSUBISHI GAS CHEMICAL COMPANY, INC., 5-2, Marunouchi 2-chome Chiyoda-Ku, Tokyo (JP)**

(72) Inventor: **Kawaki, Takao Mitsubishi Gas Kagaku K.K., Honsha Kenkyusho 1-1, Niijyuku 6-chome, Katsushika-ku Tokyo (JP)**
Inventor: **Nishizawa, Chiharu Mitsubishi Gas Kagaku K.K., Honsha Kenkyusho 1-1, Niijyuku 6-chome, Katsushika-ku Tokyo (JP)**
Inventor: **Mizutani, Makoto Mitsubishi Gas Kagaku K.K., Honsha Kenkyusho 1-1, Niijyuku 6-chome, Katsushika-ku Tokyo (JP)**
Inventor: **Sakakibara, Yoshihisa Mitsubishi Gas Kagaku K.K., Honsha Kenkyusho 1-1, Niijyuku 6-chome, Katsushika-ku Tokyo (JP)**

(74) Representative: **Myerscough, Philip Boyd et al, J.A.Kemp & Co. 14, South Square Gray's Inn, London, WC1R 5EU (GB)**

## (54) Process for producing polyphenylene oxides.

(57) A process for producing a polyphenylene oxide which comprises oxidatively polycondensing at least one phenol in the presence of a catalyst composed of a cuprous salt and a primary or secondary amine in a mixed solvent consisting of 1 part by weight of a good solvent for the resulting polyphenylene oxide and 0.9 to 1.1 parts by weight of a poor solvent for the resulting polyphenylene oxide.

The polyphenylene oxide has superior heat resistance such that it has a glass transition point at least 5°C higher than that of a polyphenylene oxide having the same structural units and produced by a known solution polymerization method.



ACTORUM AG

PROCESS FOR PRODUCING POLYPHENYLENE OXIDES

This invention relates to a process for producing polyphenylene oxides, and more specifically, to a process for producing polyphenylene oxides having superior heat resistance from phenols by oxidative polycondensation.

Polyphenylene oxides are known as engineering plastics having excellent heat resistance, mechanical properties and electrical properties, and find extensive use in various applications because of these characteristics. In particular, it is well known that poly(2,6-dimethyl-1,4-phenylene) oxide and a polyphenylene oxide copolymer composed of 2,6-dimethylphenoxy groups and 2,3,6-trimethylphenoxy groups are used in practical applications as useful plastics.

A solution polymerization method and a precipitation method have heretofore been known for the production of polyphenylene oxides. The solution polymerization method comprises oxidatively polymerizing a phenol in a solvent capable of dissolving the phenol and the resulting polymer, bringing the resulting polymer solution into contact with a poor solvent for the polyphenylene oxide to precipitate the desired polymer, and separating and recovering the desired polymer. The precipitation method comprises oxidatively polymerizing a phenol in a mixture of a good solvent and a poor solvent for polyphenylene oxide, and precipitating the desired polymer as particles in the reaction system as soon as it is formed.

These methods are described in various publications including patent documents. In regard to the precipitation method, Japanese Patent Publication No. 26318/1974 discloses a method of homopolymerizing a 2,6-disubstituted phenol using a catalyst composed of a cuprous salt and a tertiary amine, and Japanese Patent Publication

No. 50080/1977 discloses a method of producing a homo- or co-polymer of a 2,6-disubstituted phenol using a catalyst composed of a cuprous salt and a tertiary amine. Japanese Laid-Open Patent Publication No. 53530/1982 discloses a method in which a cycloaliphatic compound is used as the poor solvent. The polyphenylene oxides obtained by these methods, however, have an intrinsic viscosity of not more than 0.46 dl/g which is below the lower limit (0.5 dl/g) generally required for practical purposes. In addition, none of these references describe a catalsyt composed of a cuprous salt and a primary amine or the thermal properties of the resulting polyphenylene oxides.

It is an object of this invention therefore to provide a polymerization process for the production of polyphenylene oxides.

Another object of this invention is to produce polyphenylene oxides having superior heat resistance from phenols by the precipitation method.

Still another object of this invention is to produce polyphenylene oxides having superior heat resistance in a novel oxidative polymerization system.

Further objects and advantages of this invention will become apparent from the following description.

According to this invention, these objects and advantages are achieved by a process for producing a polyphenylene oxide having superior heat resistance, which comprises oxidatively polycondensing at least one phenol in the presence of a catalyst composed of a cuprous salt and a primary or secondary amine in a mixed solvent consisting of 1 part by weight of a good solvent for the resulting polyphenylene oxide and 0.9 to 1.1 parts by weight of a poor solvent for the resulting polyphenylene oxide.

The starting material used in the process of this invention is a phenol of the following formula (1)

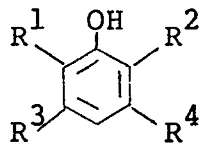

..... (1)

wherein $R^1$ represents a member selected from the class consisting of alkyl, alkoxy, haloalkyl and haloalkoxy groups, $R^2$, $R^3$ and $R^4$ are identical or different and each represents a member selected from the class consisting of a hydrogen atom, halogen atoms, and alkyl, alkoxy, haloalkyl and haloalkoxy groups, provided that the carbon atom of the alkyl and alkoxy groups which is located nearest to the phenyl ring is not tertiary and the haloalkyl and haloalkoxy groups have at least two carbon atoms between the halogen atom and the phenyl ring.

In formula (1), the alkyl and alkoxy groups may be linear or branched, but the carbon atoms of these groups which is nearest to the phenyl group to which they are bonded should not be tertiary. Preferably, these alkyl and alkoxy groups have 1 to 10 carbon atoms. Examples of the alkyl groups are methyl, ethyl, n-propyl, iso-propyl, n-butyl, iso-butyl, sec-butyl, n-pentyl, n-hexyl, n-octyl, n-nonyl, and n-decyl groups. Examples of the alkoxy groups are methoxy, ethoxy, n-propoxy, iso-propoxy, n-butoxy, iso-butoxy, sec-butoxy, n-pentoxy, n-hexoxy, n-octoxy, n-nonyloxy and n-decyloxy groups.

The haloalkyl and haloalkoxy groups in formula (1) may be linear or branched, but should have at least two carbon atoms between the halogen atom and the phenyl ring to which they are bonded. Examples of the halogen atoms are fluorine, chlorine, bromine and iodine atoms. Examples of the haloalkyl groups are haloethyl, halopropyl, halobutyl, halopentyl, haloamyl, halovinyl and haloallyl groups. Likewise, examples of the haloalkoxy group are haloethoxy, halopropoxy, halobutoxy, halopentoxy and haloallyloxy groups.

Illustrative of the compound of formula (1) are

2,6-dimethylphenol, 2,6-diethylphenol, 2,6-dipropylphenol, 2-methyl-6-ethylphenol, 2-methyl-6-propylphenol, 2-ethyl-6-propylphenol, o-cresol, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol, 2,6-dimethyl-3-propylphenol, 2-chloro-6-ethylphenol, 2,6-dimethyl-3-allylphenol, 2,6-diphenylphenol, 2-methyl-6-methoxyphenol, and 2,6-dibenzylphenol.

These phenols may be used singly or in combination.

According to the process of this invention, at least one such phenol is oxidatively polycondensed in a mixed solvent composed of a good solvent and a poor solvent for the resulting polyphenylene oxide. The mixed solvent consists of 1 part by weight of the good solvent and 0.9 to 1.1 parts by weight of the poor solvent. Examples of the good solvent are aromatic hydrocarbons and halogenated aromatic hydrocarbons. The aromatic hydrocarbons are benzene and benzenes preferably substituted by alkyl, especially preferably ($C_{1-2}$-alkyl)-substituted benzene. The halogenated aromatic hydrocarbons are benzenes substituted preferably by chlorine. Specific example of the aromatic hydrocarbons are benzene, toluene, xylene, ethylbenzene and cumene, and examples of the halogenated aromatic hydrocarbons are chlorobenzene and dichlorobenzene. Toluene and xylene are especially preferred as the good solvent. Examples of the poor solvent are aliphatic hydrocarbons, preferably linear aliphatic hydrocarbons. Aliphatic hydrocarbons having 5 to 10 carbon atoms, particularly saturated aliphatic hydrocarbons, are preferred. Specific examples are n-pentane, n-hexane, n-heptane and n-octane. n-Heptane and n-octane are especially preferred as the poor solvent.

According to the process of this invention, the oxidative polycondensation is carried out in the presence of a catalyst composed of a cuprous salt and a primary or secondary amine.

The cuprous salt is, for example, a salt formed between a monovalent copper cation and a mono- or di-valent anion. Specific examples are cuprous chloride, cuprous bromide, cuprous iodide, cuprous cyanide, cuprous thiocyanide, cuprous sulfate and cuprous acetate.

Suitable primary or seconddary amines for use in this invention are, for example, those of the following formula (2)

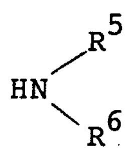

..... (2)

wherein $R^5$ represents an alkyl, cycloalkyl or arylalkyl group, $R^6$ represents a hydrogen atom or an alkyl, cycloalkyl or arylalkyl group, or $R^5$ and $R^6$ may form a ring together with the nitrogen atom to which they are bonded.

The alkyl group for $R^5$ and $R^6$ may be linear or branched, and preferably has 1 to 10 carbon atoms. The cycloalkyl group for $R^5$ and $R^6$ is preferably 5- to 7-membered. The arylalkyl group for them is one in which the aryl moiety is phenyl or ($C_{1-5}$-alkyl)phenyl. Preferably, the alkyl moiety in the alkylphenyl has 1 to 2 carbon atoms.

$R^5$ and $R^6$ may form a ring together with the nitrogen atom to which they are bonded. In this case, $R^5$ and $R^6$ form a 5- to 7-membered heterocyclic group preferably containing an oxygen or nitrogen atom as a further heteroatom.

Examples of the primary amine of formula (2) include monoalkylamines such as ethylamine, propylamine, isopropylamine, n-butylamine, amylamine and laurylamine,

cycloalkylamines such as cyclopentylamine and cyclohexylamine, and aralkylamines such as benzylamine and beta-phenethylamine. Examples of the secondary amine of formula (2) include dialkylamines such as dimethylamine, diethylamine, dipropylamine and dibutylamine, dicycloalkylamines such as dicyclohexylamine, and diaralkylamines such as dibenzylamine.

The cuprous salt and the primary or secondary amine are used in catalytic amounts in the process of this invention. For example, the cuprous salt may be used in an amount of 0.001 to 0.01 mole per mole of the phenol, and the primary or secondary amine may be used in an amount of 0.5 to 2.0 moles per mole of the phenol.

The oxidative polycondensation can be carried out by methods known per se while passing oxygen or a gas containing oxygen through the reaction system. When the oxidative polycondensation proceeds and the desired polymer is formed, the polymer precipitates as particles in the reaction system. After the reaction, the precipitate is separated by filtration, and the desired polymer is recovered. The reaction is carried out usually at a temperature of 20 to 100°C. Industrially, air is used as the oxygen-containing gas to be blown into the reaction system, but the oxygen-containing gas is not particularly limited to it.

The process of this invention can give polyphenylene oxides having superior heat resistance. The heat resistance of polyphenylene oxide can be evaluated by various methods. One emthod is to evaluate it by the glass transition point (Tg) of the polyphenylene oxide. The glass transition point can be measured by using a differential scanning calorimeter.

The marked feature of the polyphenylene oxides obtained by the process of this invention is that they have higher glass transition points than polyphenylene oxides obtained by the conventional solution polymerization method

as shown in Comparative Examples given hereinbelow. For example, poly(2,6-dimethyl-1,4-phenylene)oxide having an inherent viscosity, measured in chloroform at 30°C, of 0.50 dl/g and a copolymer obtained from 95 mole% of 2,6-dimethylphenol and 5 mole% of 2,3,6-trimethylphenol and having an inherent viscosity, measured in chloroform at 30°C, of 0.523 dl/g, which were produced by the known solution polymerization method, have been found to have a glass transition point of 215 and 222.5°C, respectively, as measured by a differential scanning calorimeter ("DSC-1B" made by Perkin Elmer Company) in a nitrogen atmosphere at a temperature elevating rate of 8°C/min.). The polymers produced by the process of this invention evidently have much higher glass transition points than the above polymers. Accordingly, the polyphenylene oxides obtained by the process of this invention which have high glass transition points have higher heat resistance. Compositions of these polyphenylene oxides obtained by mixing them with other resins such as high impact polystyrene resin, polyolefins and rubbers and various additives can take advantage of the high heat resistance of the polyphenylene oxides, and this broadens the range of application of polyphenylene oxides as a molding material.

Accordingly, the present invention provides a polyphenylene oxide having especially high heat resistance characterized in that

(A) it is produced by the process of this invention,

(B) it has an inherent viscosity, measured in chloroform at 30°C, of from 0.47 to 0.70 dl/g,

(C) is has structural units represented by the following formula (1)'

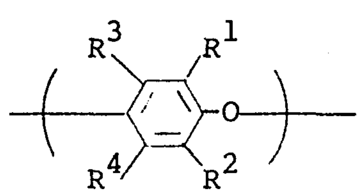

..... (1)'

wherein $R^1$, $R^2$, $R^3$ and $R^4$ are the same as defined hereinabove,

and

(D) it has a glass transition point at least 5 °C higher than that of a polyphenylene oxide having the same structural units and produced by a known solution polymerization method.

Among polyphenylene oxides within the above definition, a homoplolymer composed of structural units of formula (1)' in which both $R^1$ and $R^2$ are alkyl groups, specially methyl groups and both $R^3$ and $R^4$ are hydrogen atoms, namely structural units from a 2,6-dialkylphenol, particularly 2,6-dimethylphenol, and a copolymer composed of structural units of formula (1)' in which both $R^1$ and $R^2$ are alkyl groups, especially methyl groups, and $R^3$ and $R^4$ are hydrogen atoms and structural units of formula (1)' in which $R^1$, $R^2$ and $R^3$ are alkyl groups, particularly methyl groups and $R^4$ is a hydrogen atoms, that is, structural units from a 2,6-dialkylphenol, particularly 2,6-dimethylphenol and structural units from a 2,3,6-trialkylphenol, particularly 2,3,6-trimethylphenol, are especially noteworthy. The latter copolymer preferably contains 90 to 98 mole% of the structural units from 2,6-dimethylphenol.

The polyphenylene oxides in accordance with this invention have high glass transition points as stated above. For example, homopolyphenylene oxide composed of recurring structural units of formula (1)' in which $R^1$ and $R^2$ are methyl groups and $R^3$ and $R^4$ are hydrogen atoms shows a glass transition point of as high as 225.5°C at an inherent viscosity of 0.55 dl/g. Polyphenylene oxide copolymer composed of structural units of formula (1)' in which $R^1$ and $R^2$ are methyl groups and $R^3$ and $R^4$ are hydrogen atoms and structural units of formula (1)' in which $R^1$, $R^2$ and $R^3$ are methyl groups and $R^4$ is a hydroen atom, the proportion of the latter units being 90 to 98 mole%, shows a glass transition point of as high as 226°C or more

at an inherent viscosity of at least 0.47 dl/g.

The following Examples and Comparative Examples illustrate the present invention in greater detail. The glass transition points were measured by a differential scanning calorimeter (DSC-1B made by Perkin Elmer Company) in a nitrogen atmosphere at a temperature elevating rate of 8°C/min. All parts in these examples are by weight. The inherent viscosities of the polymers were measured in chloroform at 30°C.

COMPARATIVE EXAMPLE 1

Solution polymerization method:-

A reactor equipped with a stirrer, a reflux condenser and an air blowing tube was charged with 188.9 parts of 2,6-xylenol, 11.1 parts of 2,3,6-trimethylphenol and 2000 parts of toluene, and the phenols were completely dissolved. Then, a solution of 1 part of cuprous iodide in 134 parts of n-butylamine was added, and the mixture was warmed to 37°C.

The solution was vigorously stirred, and the reaction was started by passing air through the solution. Ninety minutes after the starting of the reaction, the stirring and blowing of air were stopped.

Hydrochloric acid was added to the resulting reaction solution to stop the reaction. An excess of methanol was added to the reaction solution to precipitate the polymer. The precipitate was separated by filtration and washed to recover the desired polymer.

The resulting polyphenylene oxide copolymer had an inherent viscosity of 0.523 dl/g and a glass transition point of 222.5°C.

COMPARATIVE EXAMPLE 2

Solution polymerization method:-

Poly(2,6-dimethyl-1,4-phenylene)oxide having an inherent viscosity of 0.50 dl/g and a glass transition point of 215°C was obtained by repeating the procedure of Comparative Example 1 except that 199 parts of 2,6-xylenol

were used instead of 188.9 parts of 2,6-xylenol and 11.1 parts of 2,3,6-trimethylphenol.

EXAMPLE 1

The same reactor as used in Comparative Example 1 were charged with 600 parts of toluene and 588 parts of n-heptane. A catalyst prepared by dissolving 1.0 part of cuprous iodide in 134 parts of n-butylamine was added, and the mixture was heated to about 40°C. With stirring, a solution of 188.9 parts of 2,6-dimethylphenol and 11.1 parts of 2,3,6-trimethylphenol in a mixture of 400 parts of toluene and 392 parts of n-heptane was fed into the catalyst solution by means of a metering pump. Over the course of about 80 minutes, all of the solution was fed into the reactor. With the progress of the polymerization reaction, a precipitate formed in the reaction system. After 120 minutes from the starting of the reaction, the stirring was stopped to terminate the reaction. The precipitate was separated by filtration from the resulting solution, purified by washing, and dried.

The product was a polyphenylene oxide copolymer having an inherent viscosity of 0.528 dl/g and a glass transition point of 231.5°C. It is seen that the glass transition temperature of this copolymer is 9°C higher than that of the polymer produced by the known solution polymerization method in Comparative Example 1.

EXAMPLE 2

A polyphenylene oxide homopolymer was produced by repeating the procedure of Example 1 except that 199 parts of 2,6-dimethylphenol alone was used as the starting material. The resulting polymer had an inherent viscosity of 0.55 dl/g and a glass transition point of 225.5°C which is 10.5°C higher than that of the polymer obtained by the known solution polymerization method in Comparative Example 2.

EXAMPLE 3

Example 1 was repeated except that 134 parts of

n-hexylamine was used as the primary amine. The resulting copolymer had an inherent viscosity of 0.50 dl/g and a glass transition point of 228°C which is 5.5°C higher than that of the copolymer obtained in Comparative Example 1.

EXAMPLE 4

Example 1 was repeated except that 1.3 parts of cuprous thiocyanide was used as the cuprous salt and the reaction time was changed to 200 minutes. The resulting copolymer had an inherent viscosity of 0.50 dl/g and a glass transition point of 228°C.

EXAMPLE 5

Example 1 was repeated except that n-octane was used instead of n-heptane in the same amount. After a reaction period of 180 minutes, a polymer having an inherent viscosity of 0.60 dl/g and a glass transition point of 228.5°C was obtained.

EXAMPLE 6

Example 1 was repeated except that chlorobenzene was used instead of toluene in the same amount. After a reaction period of 110 minutes, a polymer having an inherent viscosity of 0.65 dl/g and a glass transition point of 229°C was obtained.

EXAMPLE 7

Example 1 was repeated except that the amount of toluene was changed to 386 parts and the amount of n-heptane was changed to 406 parts. A copolymer having an inherent viscosity of 0.51 dl/g and a glass transition point of 228°C was obtained.

COMPARATIVE EXAMPLE 3

Example 1 was repeated except that the amount of toluene was changed to 344 parts and the amount of n-heptane was changed to 448 parts (namely, the proportion of the poor solvent was higher). The resulting copolymer had an inherent viscosity of only 0.413 dl/g and a glass transition point of 222°C.

CLAIMS

1. A process for producing a polyphenylene oxide which comprises oxidatively polycondensing at least one phenol in the presence of a catalyst composed of a cuprous salt and an amine, characterised by oxidatively polycondensing at least one phenol in the presence of a catalyst comprising a cuprous salt and a primary or secondary amine in a mixed solvent consisting of 1 part by weight of a good solvent for the resulting polyphenylene oxide and 0.9 to 1.1 parts by weight of a poor solvent for the resulting polyphenylene oxide.

2. A process according to claim 1 wherein the phenol is a compound represented by the formula

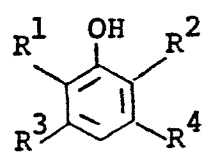

..... (1)

wherein $R^1$ represents alkyl, alkoxy, haloalkyl or haloalkoxy, $R^2$, $R^3$ and $R^4$ are identical or different and each represents hydrogen, halogen, alkyl, alkoxy, haloalkyl or haloalkoxy, provided that the carbon atom of any alkyl or alkoxy group which is located nearest to the phenyl ring is not tertiary and any haloalkyl or haloalkoxy group has at least two carbon atoms between the halogen atom and the phenyl ring.

3. A process according to claim 1 or 2 wherein the cuprous salt is a salt formed between a monovalent copper cation and a mono- or di-valent anion.

4. A process according to claim 3 wherein the cuprous salt is cuprous chloride, cuprous bromide, cuprous iodide, cuprous cyanide, cuprous thiocyanide, cuprous sulfate or cuprous acetate.

5. A process according to any one of the preceding claims wherein the primary or secondary amine is a compound represented by the following formula

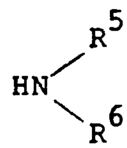

..... (2)

wherein $R^5$ represents alkyl, cycloalkyl or arylalkyl, $R^6$ represents hydrogen, alkyl, cycloalkyl or arylalkyl, or $R^5$ and $R^6$ may form a ring together with the nitrogen atom to which they are bonded.

6. A process according to any one of the preceding claims wherein the good solvent is an aromatic hydrocarbon or a halogenated aromatic hydrocarbon.

7. A process according to claim 6 wherein the aromatic hydrocarbon is toluene or xylene.

8. A process according to any one of the preceding claims wherein the poor solvent is an aliphatic hydrocarbon.

9. A process according to claim 8 wherein the aliphatic hydrocarbon is n-heptane or n-octane.

10. A polyphenylene oxide having superior heat resistance, characterised in that

(A) it has been produced by a process as claimed in any one of the preceding claims;

(B) it has an inherent viscosity, measured in chloroform at 30°C, of from 0.47 to 0.70 dl/g;

(C) it has structural units represented by the formula

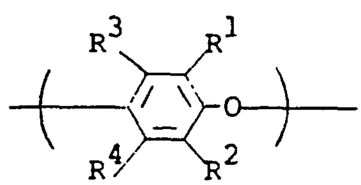

wherein $R^1$, $R^2$, $R^3$ and $R^4$ are as defined in claim 2;

(D) it has a glass transition point at least 5°C higher than that of a polyphenylene oxide having the same structural units as in (C) and produced by a known solution polymerisation method.

11. A polyphenylene oxide according to claim 10 which is a homopolymer composed of said structural units of the formula in which $R^1$ and $R^2$ are methyl groups and $R^3$ and $R^4$ are hydrogen atoms.

12. A polyphenylene oxide according to claim 10 which is a copolymer having a glass transition point of at least 226°C and composed of said structural units of the formula in which $R^1$ and $R^2$ are methyl groups and $R^3$ and $R^4$ are hydrogen atoms and said structural units in which $R^1$, $R^2$ and $R^3$ are methyl groups and $R^4$ is a hydrogen atom, the proportion of the latter structural units being 90 to 98 mole%.